**Europäisches Patentamt**

**European Patent Office**

**Office européen des brevets**

(19)

(11) Publication number: **0 246 699**
**A1**

## (12) EUROPEAN PATENT APPLICATION

(21) Application number: **87200882.6**

(22) Date of filing: **13.05.87**

(51) Int. Cl.³: **G 02 B 6/08**

(30) Priority: **23.05.86 NL 8601317**

(43) Date of publication of application:
**25.11.87 Bulletin 87/48**

(84) Designated Contracting States:
**DE FR GB NL**

(71) Applicant: **N.V. Philips' Gloeilampenfabrieken**
**Groenewoudseweg 1**
**NL-5621 BA Eindhoven(NL)**

(72) Inventor: **De Jong, Augustinus Cornelis Gerrit**
**c/o INT. OCTROOIBUREAU B.V. Prof. Holstlaan 6**
**NL-5656 AA Eindhoven(NL)**

(72) Inventor: **Schrederhof, Antonie**
**c/o INT. OCTROOIBUREAU B.V. Prof. Holstlaan 6**
**NL-5656 AA Eindhoven(NL)**

(74) Representative: **Scheele, Edial François et al,**
**INTERNATIONAAL OCTROOIBUREAU B.V. Prof.**
**Holstlaan 6**
**NL-5656 AA Eindhoven(NL)**

(54) Fibre plates having coding fibres.

(57) Coding fibre bundles for coding purposes are incorporated in a fibre plate and are formed by incorporating the coding fibre bundles in a stack from which the fibre plates are cut. It is then established for each fibre plate from which stack it has been cut and furthermore a date or number thereof may be incorporated per stack.

EP 0 246 699 A1

0246699

"Fibre plates having coding fibres"

The invention relates to a fibre plate having a number of glass fibre bundles stacked in rows.

Such a fibre plate is disclosed in GB 1,470,889. A glass fibre plate disclosed in said specification comprises a number of glass fibre bundles which are stacked in mutually orthogonal rows and columns and which each comprise a large number of glass fibres. Such fibre plates are cut from a fibre bundle stack, i.e. a rod composed of drawn and compressed glass fibres having a length of, for example, approximately 25 cm. All fibre plates cut from the same stack conventionally show equal properties to a high extent and usually also differences to the same extent, for example, certain defects or advantages. It is also useful, in particular for manufacturers of fibre plates, to find out in a simple manner from which stack an individual fibre plate has been cut. As a result of this the cause of differences in individual plates can often be traced rapidly because in many cases said cause originates from production conditions of the stack in question.

It is an object of the invention to provide an unambiguous stack coding in fibre plates and for that purpose a fibre plate of the type mentioned in the opening paragraph is characterized according to the invention in that it comprises fibre bundles which are provided with codes and have different light transmissions.

By providing, in the fibre bundle stack and preferably outside an effective image field of fibre plates to be formed therefrom, a coding with fibre bundles distinguishing from the surroundings, it can immediately be read from which stack the subsequent plates originate.

In a preferred embodiment a difference in transmission has been realised by using both fibre bundles with absorbing fibres and fibre bundles without absorbing fibres. In fibre plates composed of bundles having absorbing fibres, fibre bundles without absorbing fibres have been provided in a coded position outside the effective image part of the plate. For this purpose, for example, a row or block of fibre bundles beyond the image field can be chosen.

In the production of fibre plates according to the invention both fibre bundles with absorbing fibres and fibre bundles without absorbing fibres are made. Dependent on the desired final product, the absorbing bundles or the non-absorbing bundles will follow the prior art production process. For example, in the last stacking but one, a type of hybrid fibre bundles are formed with, for example, a part of non-absorbing fibre bundles in a corner and for the remaining part absorbing fibres, or conversely. In the last stack said hybrid fibre bundles are stacked in a given position and a given orientation in the fibre bundles, after which the stack and hence all the fibre plates to be formed therefrom are coded. For example, with four hybrid fibre bundles in a fibre bundle pack of, for example, eight fibre bundles, which for each of the four hybrid fibre bundles four angular orientations can be made. As a result of this the comparatively large number of approximately 20,000 different codings becomes possible. Codings having no difference in the top view or underneath view are preferably avoided.

Where the coding fibre bundles are placed outside the effective image field, the invention can also be used for channel amplifier plates produced from glass fibre bundles having closed channels at the circumference as described in US 3,693,005. Because the production process for forming stacks occurs there quite correspondingly, the coding may also be corresponding. Inside the image field the core glass is etched away from the fibres and if absorbing fibres are not to be used the coding fibre bundles will be composed of non-absorbing fibres.

A few preferred embodiments according to the invention will now be described in greater detail hereinafter with reference to the drawing, in which:

Figure 1 shows a bevelled monofibre,

Figure 2 shows a monofibre bundle equipped with absorbing fibres;

Figure 3 shows a dual-fibre bundle equipped with absorbing fibre bundles,

Figure 4 shows a non-bevelled monofibre,

Figure 5 shows a monofibre bundle not equipped with absorbing fibres,

Figure 6 shows a bundle with and without absorbing dual fibres.

Figure 7 shows a coded fibre-optic plate.

Figure 1 is a cross-sectional view of a fibre which may be used as the starting material for building a fibre plate. The fibre comprises a core 1 and a cladding 2. In practical embodiments both the core and the cladding are of glass but the core may alternatively be of quartz or a synthetic resin, for example, for applications in a field of radiation with deviating wavelength. For fibre-optic plates the core glass differs functionally from the cladding glass by a difference in the refractive index. The refractive index of the core glass is higher than that of the cladding glass. For example, the core glass has a refractive index of approximately 1.8 and the cladding glass of approximately 1.5. In fibre plates which are constructed as channel amplifier plates but are further produced in quite an analogous manner, the core glass differs from the cladding glass by a better solubility thereof in an etchant. A channel plate is formed from fibre plates via an etching process. An outer part of the plate is often not subjected to the etching process so that at that area the fibres remain closed and a coding can be provided according to the invention.

In the production process for fibre bundles with absorbing fibres, cladding glass is drawn around a core glass rod which is manufactured with comparatively narrow tolerances. A monofibre 4 as shown in Figure 1 is then formed. The side thereof is approximately, for example, 4 mm and a bevelled part 3 thereof is approximately 1 mm. Of these monofibres 4 a monofibre bundle 5 as shown in Figure 2 is then formed which comprises, for example, 16 times 16 monofibres. Upon stacking the monofibres, each time four bevelled corners adjoin each other so that interstices 6 are formed in which fewer transparent fibres are placed. A fibre-optic bundle thus to be formed shows a reduced transverse transmission for the light to be transported, will hereinafter be termed absorbing fibre bundle, and is known as fibre-optic with extramural absorption "EMA". The fibre bundle 5 is drawn again to form a fibre bundle having a side of, for example, 1.6 mm. Fibre bundles 5' thus formed are stacked to form a fibre bundle which in this case is square and which comprises, for example, 12 times 12 dual fibres 5'. The bundle is then drawn again and absorbing triplex fibres 7 are formed having, for example, a side of 1.7 mm.

A monofibre bundle 12 is formed in a corresponding manner from a Figure 4 monofibre 10 as shown in Figure 5. The monofibre bundle thus formed comprises no absorbing fibres and will therefore be termed non-absorbing fibre bundle. It is to be noted that the term absorbing and non-absorbing are relative terms and only serve to distinguish between fibre bundles having absorbing fibres, so fibres placed in the interstices 6 with an increased absorption for the light to be used, and fibre bundles in which said absorbing fibres are not incorporated or fibre bundles in which a subsequently visible difference in transmission is incorporated in a different manner. Starting from non-absorbing dual fibres 12' and absorbing dual fibres 5' a hybrid fibre bundle 14 shown in Figure 6 is formed with partly absorbing fibres 5' and partly, for example, preferably a corner portion 15 of approximately 2 x 2 to 10 x 10, non-absorbing fibres 12'. This bundle is then drawn again and a hybrid bundle 14' is formed having a thickness of, for example, 1.7 mm.

Starting from absorbing triplex fibres 7' and hybrid fibres 14' a stack as shown in Figure 7 is formed. An effective image-forming part 16 always consists of mutually equal fibre bundles as well as a large part of a peripheral area 18. Hybrid fibres 14' are provided in a row or group 1₅ in the peripheral area in coding positions and coding angular orientations. Such a triplex fibre bundle is formed, for example, by stacking triplex fibres in, for example, an octagonal jig, for example, as described in Applicants' Netherlands Patent Application No. 8503053. As indicated in GB 1,470,889 the occurrence of interstices 19 in said stack may be used to provide an angularly orienting feature in the fibre plate. For this purpose a characterising fibre 20 may be placed in one or several of the said interstices 19 as a result of which a line 22 is determined which encloses an angle of 45$^{\circ}$ with the orthogonal stack structure. For this angular orientation coding fibre bundles may also be used, for example, by incorporating such a fibre bundle in a position 24 as a result of which line 26 is determined so as to coincide with the orthogonal structure. A possibly better defined line 26 is obtained by also arranging a hybrid fibre bundle in a position 28. These or extra hybrid fibre bundles may also be used to prevent confusion in coding by turning the plates. A fibre plate may comprise a completely identical lower and upper side but these two orientations give a difference in a non-mirror symmetrically provided coding as appears already from a coding indicated here with four hybrid fibres 14 which otherwise only have an equal angular orientation. A non-mirror symmetrically provided extra coating can fix the viewing direction for the coding in a simple manner. For this purpose may also serve, for example, a fibre bundle which is built up of non-absorbing fibres and is not provided mirror-symmetrically. By the coating itself, for example, on the one hand a year or a date and on the other hand a stack number for that year may also be coded. For either of the two, for example, the date, the selected block of fibre bundles, hence the position of the coding within the interstices 18 may be chosen, for example, and for the other one, for example, the number, the coding in position and angular orientation within that block may be chosen. With a few hybrid fibre bundles, a number can also be coded directly by allotting a numerical value, for example, from 1 to 4 to each of the angular orientations thereof. For a normal year production a number of three or four hybrid fibres is already amply sufficient. By using a coding as described the occurrence of sharp edges and loose particles as a result of cutting or scratching codings is entirely avoided.

# CLAIMS

1.      A fibre plate having a number of glass fibre bundles placed in rows, characterized in that it comprises fibre bundles which are provided with codes and have different light transmissions.

2.      A fibre plate as claimed in Claim 1, characterized in that the difference of the coding glass fibre bundles is formed by the presence or absence of fibres having an increased light absorption therein.

3.      A fibre plate as claimed in Claim 1 or 2, characterized in that coding glass fibre bundles are formed by hybrid fibre bundles having both fibre bundles with absorbing fibres and fibre bundles without absorbing fibres.

4.      A fibre plate as claimed in any of the preceding Claims, characterized in that the coding fibre bundles in a fibre plate are incorporated outside a central part of the fibre plate to be used effectively.

5.      A fibre bundle plate as claimed in Claim 3 or 4, characterized in that both the position of coding fibre bundles and angular orientations thereof contribute to the coding.

6.      A fibre plate as claimed in any of the preceding Claims, characterized in that an extra coding is provided for fixing a coding viewing direction for the fibre plate.

7.      A fibre plate as claimed in any of the preceding Claims, characterized in that non-coding fibre bundles are formed by fibre bundles with absorbing fibres and coding fibre bundles without absorbing fibres.

8.      A fibre optic plate as claimed in any of the Claims 3 to 7, characterized in that a corner portion which covers approximately one fourth of the area of a fibre plate built up from hybrid fibre bundles consists of coding fibre bundles.

9.        A fibre plate as claimed in any of the preceding Claims, characterized in that a central part comprises glass fibres having a cladding glass, a core glass with different refractive index to form a fibre optic plate.

10.        A fibre plate as claimed in any of the Claims 1 to 8, characterized in that a central part comprises channels which are etched open and a peripheral part of closed channels which are not etched to form a channel plate.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | FR-A-2 236 194 (PHILIPS) <br> * Claims; figures * | 1 | G 02 B    6/08 |
| A | | 2,3,4, 9,10 | |
| | --- | | |
| Y | GB-A-2 104 866 (THE SECRETARY OF STATE FOR DEFENCE LONDON) <br> * Page 2, lines 73-85,99-106 * | 1 | |
| | --- | | |
| A | US-A-3 397 022 (H.B. COLE) <br> * Colonne 10, lines 5-18; figures 15-19 * | 1 | |
| | --- | | |
| A,D | US-A-3 693 005 (G. CLEMENT) <br> * Abstract * | 1 | |
| | | | **TECHNICAL FIELDS SEARCHED (Int Cl 4)** |
| | --- | | |
| A | FR-A-2 024 953 (PHILIPS) <br> * Page 3, lines 19-22; claims * | 1 | G 02 B <br> H 01 J <br> C 03 B <br> G 09 F |
| | ----- | | |

The present search report has been drawn up for all claims

| Place of search | Date of completion of the search | Examiner |
|---|---|---|
| THE HAGUE | 20-07-1987 | PFAHLER R. |